# EUROPEAN PATENT APPLICATION

(11) **EP 0 622 643 A1**
(43) Date of publication of application: **02.11.1994**
(21) Application number: 94302726.8
(22) Date of filing: 18.04.1994
(51) Int. Cl.: G01V 3/28

(54) **Induction logging instrument**

(30) Priority: 28.04.1993 GB 9308806
(71) Applicant: BPB INDUSTRIES public limited company, Slough SL3 6DU (GB)
(72) Inventor: Spencer, Michael Charles, Melton Mowbray, Leicestershire LE14 4DD (GB)
(74) Representative: Robson, Aidan John

(57) **Abstract**

An induction logging instrument for measurement while drilling applications is formed from a non-magnetic centre tube (28). A transmitter coil or coils (30) and one or more receiver coils (32, 34) are wound on the tube. Each coil is spaced from the centre tube by a sleeve of magnetically permeable core material (36) and lines of flux associated with each coil link through the core material rather than the centre tube.

## Description

This invention relates to induction logging instruments of the type designed to measure the resistivity/conductivity of formations through which boreholes are drilled for oil, gas or other minerals.

A standard induction logging instrument is known as an induction sonde and comprises an elongate non-magnetic mandrel. This may be introduced into a bore hole which passes though various formations. On one end of the mandrel there is wound a transmitter coil and on the other end a receiver coil. An AC current is applied to the transmitter coil and this creates a magnetic field in the formation adjacent to the sonde. This alternating magnetic field causes a current to flow in the formation around the section of the bore hole in which the sonde is present in a ground loop. This alternating current in the ground loop in turn has a magnetic field associated with it and this creates a further alternating field which cuts through the conductors of the receiver coil thereby inducing an alternating current in the receiver coil. The amount of current induced in the receiver coil is a function of the conductivity of the ground loop. Thus different currents will be induced in the receiver coil in dependence on the conductivity of the formation surrounding the sonde. Mutual induction between the transmitter and receiver coils is eliminated by use of a phase sensitive detector which eliminates quadrature signals.

Most induction sondes used in practice have combinations of, for example, 5, 6 or 8 receiver coils and one or more transmitter coils. The extra coils are used to eliminate undesired signals or to focus the measurements being made.

In order to obtain accurate readings no significant eddy currents should be induced in the material forming the mandrel. For this reason the mandrel is made of non-conducting material and also of non-magnetic materials so that it will not interfere with the magnetic field induced in the formation. A mandrel formed of glass fibre composite material and conventional engineering plastics is suitable to meet these requirements.

It is conventional for measurements using sondes of the type described above to be used after a borehole has been drilled. The sonde forms part of an instrumentation string passed into the borehole. Because it is formed from solid plastics material to maintain its strength cabling for other instrumentation cannot pass it and thus it is always positioned at the distal end of an instrumentation string.

For certain applications it is desirable for resistivity/conductivity measurements to be made whilst a bore hole is being drilled. Amongst other things it reduces the drilling time required and thus the cost of drilling.

Measurement whilst drilling can be performed using a coiled tubing drilling system. This comprises a hollow tube which is fed into the bore hole. Drilling mud is pumped down the tube and this powers a turbine at the distal end of the tube which rotates and drives a drill bit which cuts into the rock formation. The mud then passes up the outside of the tube back to the surface. Thus the only part of the system which is rotating is the turbine and the drill bit.

For measurement whilst drilling applications instrumentation may be provided adjacent to the drill bit and turbine. An induction sonde of the type described is not suitable because it is of solid plastics construction and thus drilling mud may not pass through it. If made hollow it would not be strong enough to be able to support the loads encountered in a drilling operation. Composite glass fibre materials and engineering plastics materials do not have the tensile and torsional strength to enable logging instruments constructed from these materials to be suitable for use in a measurement while drilling application.

In a measurement while drilling operation, or as part of an instrumentation string inserted into a bore hole, the logging instrument is controlled by and sends signals to a data acquisition and control system at the surface. This controls energisation of the transmitter coil and analyses the response of the receiver coils.

Some measurement while drilling induction logging instruments have been designed with a hollow metal core of, for example, steel. Such an instrument is described in the Log Analyst May-June 1984, pages 35 to 46. This proposes a measurement while drilling induction logging instrument which uses a steel mandrel. A gap is maintained between the transmitter coil and the mandrel and similarly between the receiver coils and the mandrel. This is to allow the receiver to respond to the intensity of the eddy currents induced in the formation rather than any eddy currents induced in the steel mandrel.

The instrument exploits the fact that at an operating frequency of 2MHz the skin depth of the electromagnetic field in steel is only 8µm (skin depth is the depth to which the electromagnetic field penetrates the steel). Consequently the field and eddy currents generated in the steel mandrel are very low.

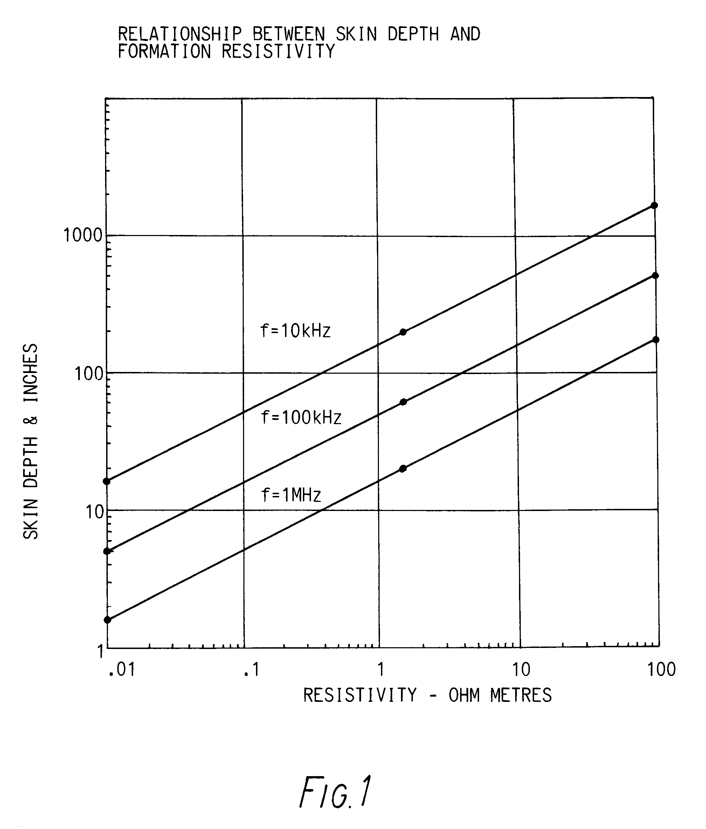

One problem with such an instrument operating at a frequency of 2MHz arises from the fact that the skin depth of the electromagnetic field induced in the surrounding formation is considerably lower than would be achieved with a lower operating frequency. Figure 1 shows the skin depth at which 60% of the signal is lost for operating frequencies of 10khz, 100kHz and 1mHz. To put this in perspective, the drilling mud which is pumped down the bore hole whilst drilling is taking place and which surrounds the sonde usually has a resistivity (RM) of 0.1 to 0.01 ohm metres depending on temperature. As can be seen from Figure 1, at high frequencies a considerable amount of the operating signal will be lost in the mud surrounding the sonde.

Preferred embodiments of the present invention provide an induction logging instrument which can be used for measurement whilst drilling at low operating frequencies and which therefore has a relatively high skin depth for the electromagnetic field generated by the transmitter coils.

The invention is defined in the appended claims to which reference should now be made.

A preferred embodiment of the invention will now be described in detail by way of example with reference to the accompanying drawings in which:
Figure 1 is the graph showing the relationship between skin depth and formation resistivity referred to above;
Figure 2 shows a mandrel and surrounding core for use in an embodiment of the present invention;
Figure 3 shows a detail of the construction of the core used in the embodiment of Figure 2;
Figures 4a and 4b show the linkage of lines of flux induced in a coil surrounding the mandrel with and without the core material of Figure 2 respectively; and
Figure 5 shows a cross section through an induction logging instrument embodying the invention.

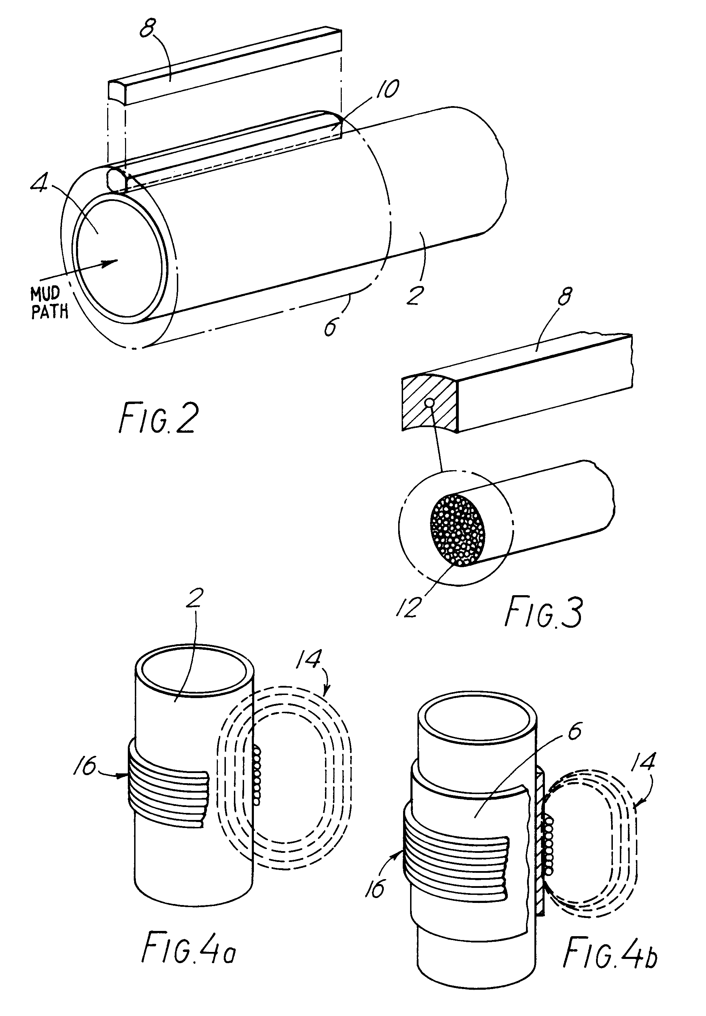

Figure 2 illustrates a centre tube 2 for an induction logging instrument formed from titanium or non-magnetic stainless steel. This provides the tensile and torsional strength required to support for a measurement whilst drilling tool. It also provides through its central hole 4 a path for drilling mud to reach the drilling bit and/or down hole motor and for cabling to pass from transmitter and receiver coils to a data acquisition and control system at the surface.

A magnetically permeable core is built up around the centre tube 2 in the area illustrated by the dotted lines 6. This core is built up from a plurality of individual elongate magnetically permeable sections 8 which are positioned around the centre tube 2 as shown at 10.

The core 6 is formed from the plurality of individual sections 8 to minimise the effect of any eddy currents which are induced by a coil which is wound on the core. The core material has a high magnetic permeability and is preferably ferrite material. The individual sections are insulated from each other to reduce further the occurrence of eddy currents. This type of construction is known from conventional power transformers.

An alternative core arrangement is illustrated in detail in Figure 3. In this the core is formed from a plurality of individually insulated wires 12. These run parallel to the centre tube 2. This form will of course also have a high magnetic permeability and will minimise eddy currents.

The transmitter and receiver coils used in an induction logging instrument having a centre tube as shown in Figure 2 are each wound on a respective core 6 provided at different positions on a centre tube 2. The effect of winding the coils on the cores has the effect of causing lines of flux induced by current flowing in the coils to link through the respective cores rather than through the metal of the centre tube thereby shielding the centre tube from the coils. This removes the effective "short circuit" which would result from winding the coils directly onto a metallic centre tube. If this were to be done the response of the receiver coil would be determined almost entirely by the properties of the centre tube and not by the properties of the surrounding formation. There are also electrostatic screens (not illustrated) on the inside and outside of the coils as in all VLF induction sondes.

Figure 4a shows the distribution of lines of flux 14 which will arise if a coil 16 is wound directly on a metallic centre tube 2. It can be seen that the lines of flux 14 cut through to the interior of the centre tube 2 and will thus induce an electric current in the centre tube. In addition to this the drilling mud which flows through the centre tube 2 in one MWD application will be conductive and a circulating electric current will therefore be induced in the drilling mud. The fact that the drilling mud is flowing along the centre tube will cause additional interference with other coils.

In Figure 4b it can be seen that the coil 16 has been wound on a core 6 of the type proposed with reference to Figure 2. The effect of the core of Figure 4b is to divert the flux through the high magnetic permeability material so that eddy currents are not produced in the metal tube or the conductive drilling fluid in the centre of the tube.

The lines of flux 14 link through the core 6. Thus the field generated by a transmitter coil on the induction logging instrument is effectively magnetically insulated from the receiver coil apart from linkage caused by currents induced in the surrounding formations.

As can be seen in Figure 4b the core is preferably constructed to be longer than the coil 16. This is to ensure that most of the flux links through the core before the end of the core material. Alternatively a single core long enough to accommodate the transmitter coil or coils and any relevant receiver coils could be used.

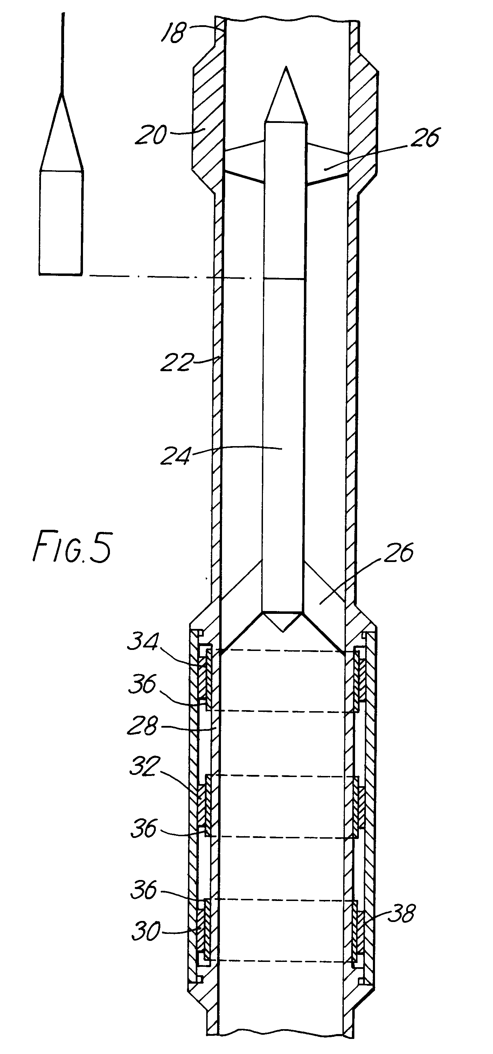

Figure 5 shows an embodiment of the invention coupled to a drill pipe for use in a measurement while drilling application. A drill pipe or coiled tubing drill pipe 18 has at its end a drilling collar 20. This is coupled to an induction logging instrument which comprises a first metallic tube section 22 containing a pod 24 to house all the necessary electronics and communications and power equipment for operation of the instrument and for transmission of signals from the instrument back to the surface. Blades or fins 26 at the top and bottom of this pod support it within the tube 22.

Below this there is attached a non-magnetic tube 28. On this are wound a transmitter coil 30 and two receiver coils 32 and 34. Each coil is wound around a sleeve of magnetically permeable core material 36 which is constructed as discussed with reference to Figures 2 and 3 above. The coils are protected by a glass fibre outer tube 38 which fits over all of them. The annulus between this outer tube and the coil mandrel is filled with oil for pressure balancing purposes. There is also a movable pressure balancing piston to allow for the thermal expansion of the oil.

Below the induction logging instrument there is provided (not illustrated) a drill bit which is powered by a down hole motor which operates by means of mud flowing through it. Alternatively the drill string can be rotated.

Thus the instrument of Figure 5 which embodies the invention is able to be used in line with a drill bit which is cutting through a formation.

Alternatively the instrument may be used in an instrumentation string lowered into a bore hole. This enables the instrument to be placed in any position in the string rather than always at the bottom as happens at present. This is because the instrument allows cables to pass through to communicate with other instrumentation.

In an alternative embodiment the metal mandrel may be replaced with a plastics mandrel of high strength or formed from some other non-metallic material. The cores on which the coils are wound would still be required to prevent interference caused by drilling mud.

By using an embodiment of the type described above the operating frequency of the transmitter coil can be selected to give good penetration of the electromagnetic field into the surrounding formation.

## Claims

1. An induction logging instrument for use in a bore hole comprising a non-magnetic centre tube (28), at least one transmitter coil (30) supported on the centre tube, and at least one receiver coil (32, 34) supported on the centre tube, characterised in that the centre tube is magnetically shielded from the transmitter and receiver coils by magnetically permeable core material.

2. An induction logging instrument according to claim 1, characterised in that the magnetically permeable core material comprises a sleeve of material spacing each coil from the centre tube.

3. An induction logging instrument according to claim 2, characterised in that each sleeve of magnetic core material is at least as long as its respective coil.

4. An induction logging instrument according to claim 2, characterised in that a single sleeve of magnetic core material is used to space each transmitter and each receiver coil from the centre tube.

5. An induction logging instrument according to claim 2, 3 or 4, characterised in that the sleeve of magnetic core material comprises a plurality of elongate sections positioned circumferentially around and substantially parallel to the centre tube.

6. An induction logging instrument according to any preceding claim, characterised in that the magnetic core material comprises ferrite material.

7. An induction logging instrument according to claim 1, 2, 3 or 4, characterised in that the magnetic core material comprises a plurality of insulated wires arranged circumferentially around and parallel to the centre tube.

8. An induction logging instrument according to any preceding claim, characterised by comprising a plurality of transmitter and receiver coils.

9. An induction logging instrument according to any preceding claim, characterised in that the centre tube comprises metallic material.

10. An induction logging instrument according to any of claims 1 to 7, characterised in that the centre tube comprises non-metallic material.

11. An induction logging instrument according to any preceding claim, characterised in that the centre tube houses a passage from one end of the instrument to the other.

12. An induction logging instrument according to claim 11, characterised in that drilling mud may pass through the passage.

13. An induction logging instrument according to claim 11, characterised in that cabling may pass through the passage.

14. An induction logging instrument according to any preceding claim, characterised in that the centre tube contains communications equipment for receiving control signals from and sending data signals to a data acquisition and control system.

15. An induction logging instrument according to claim 11 and 14, characterised in that the communications equipment is housed in a pod within the passage supported by fins attached to the wall of the passage.

16. An induction logging instrument according to any preceding claim characterised in that the instrument comprises an induction sonde.

17. An induction logging system for use in a bore hole comprising a data acquisition and control system in communication with an induction logging instrument in the bore hole, the instrument comprising a non-magnetic centre tube (28), at least one transmitter coil (30) supported on the centre tube, and at least one receiver coil (32, 34) supported on the centre tube, characterised in that the centre tube is magnetically shielded from the transmitter and receiver coils by magnetically permeable core material.

18. A method of operating an induction logging instrument in a bore hole comprising the steps of activating a transmitter coil supported on the instrument receiving signals induced in at least one receiver coil supported on the instrument, and characterised by shielding a centre tube of the instrument from the transmitter and receiver coils with magnetically permeable core material.
